(19) Europäisches Patentamt
European Patent Office
Office européen des brevets

(11) EP 4 196 530 B1

(12) EUROPEAN PATENT SPECIFICATION

(45) Date of publication and mention of the grant of the patent:
**22.07.2026 Bulletin 2026/30**

(21) Application number: **21755833.7**

(22) Date of filing: **13.08.2021**

(51) International Patent Classification (IPC):
***C08L 67/02*** *(2006.01)* ***C08L 69/00*** *(2006.01)*
***C08K 3/013*** *(2018.01)* ***C08K 3/22*** *(2006.01)*

(52) Cooperative Patent Classification (CPC):
(C-Sets available)
**C08L 67/02; C08L 69/00** (Cont.)

(86) International application number:
**PCT/IB2021/057487**

(87) International publication number:
**WO 2022/038480 (24.02.2022 Gazette 2022/08)**

# (54) LASER DIRECT STRUCTURING COMPOSITIONS INCLUDING A CRYSTALLINE POLYESTER

LASERDIREKTSTRUKTURIERUNGSZUSAMMENSETZUNGEN MIT EINEM KRISTALLINEN POLYESTER

COMPOSITIONS DE STRUCTURATION DIRECTE PAR LASER COMPRENANT UN POLYESTER CRISTALLIN

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.08.2020 EP 20191382**

(43) Date of publication of application:
**21.06.2023 Bulletin 2023/25**

(73) Proprietor: **SHPP Global Technologies B.V.**
**4612 PX Bergen op Zoom (NL)**

(72) Inventors:
- **JIANG, Xiaoming**
  **Shanghai (CN)**
- **CHENG, Yunan**
  **Shanghai (CN)**
- **ZHENG, Yun**
  **Shanghai (CN)**

(74) Representative: **Modiano, Gabriella Diana**
**Modiano & Partners SA**
**Steinsdorfstraße 14**
**80538 München (DE)**

(56) References cited:
**US-A1- 2018 171 138** **US-A1- 2019 010 324**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 67/02, C08K 3/013, C08K 3/22, C08L 69/00;**
**C08L 67/02, C08K 3/22, C08K 3/34, C08K 7/14, C08L 69/00;**
**C08L 67/02, C08K 3/22, C08K 3/34, C08L 69/00;**
**C08L 67/02, C08K 3/22, C08K 7/14, C08L 69/00**

## Description

## FIELD OF THE INVENTION

The present invention relates to crystalline polyester-based laser direct structuring (LDS) compositions, and in particular to compositions including a crystalline polyester and a polycarbonate copolymer comprising a polycarbonate-siloxane (PC-Si) copolymer, a polycarbonate-isophthalate terephthalate resorcinol (PC-ITR) copolymer, or a combination thereof.

## BACKGROUND OF THE DISCLOSURE

Laser Direct Structuring (LDS), which includes laser activation and subsequent chemical plating procedures, is widely used to generate circuit components in the consumer electronics industry such as mobile telephone technologies. In particular, LDS processes may be used to make the antenna of mobile devices. Polycarbonate (PC)-based LDS materials are favored by antenna makers because they provide a good balance of flow, mechanical and dimension stability properties. However, PC has low chemical resistance, which can result in erosion issues in the alkaline plating and thus low surface gloss. This issue becomes more serious with glass-filled PC. The eroded PC results in the glass having a "floating" appearance, which is undesirable to the customer. For at least these reasons, glass-filled PC LDS materials are not favored.
US2019010324A1 concerns a polyester resin composition for laser direct structuring, which exhibits high platability and excellent mechanical properties. This polyester resin composition for laser direct structuring is characterized by containing a laser direct structuring additive (C) at a quantity of 1 to 20 parts by mass relative to a total of 100 parts by mass of a thermoplastic polyester resin (A) and a thermoplastic resin (B) having a water absorption rate of 0.15 mass % or more, as measured using the ISO 62A method. US2018171138A1 discloses a thermoplastic resin composition. The thermoplastic resin composition includes: a polycarbonate resin; a glycol-modified polyester resin having 1,4-cyclohexane dimethanol (CHDM) content of 20 mol % to 100 mol % in a diol component; inorganic fillers; and an additive for laser direct structuring (LDS additive). The thermoplastic resin composition can have good properties in terms of plating adhesion, appearance, surface hardness, and the like.
To fulfill the high modulus requirements of mobile antenna applications, glass-filled polyamide (PA) LDS materials are used, which provide good chemical resistance and a high gloss surface after alkaline plating. However, the anisotropic feature of PA results in warpage which is a common problem of crystalline polymers. Additionally the moisturizing problem of PA further leads to poor dielectric stability which is sensitive in antenna performance and not suitable for 5G mobile applications.
These and other shortcomings are addressed by by the instant invention.

## SUMMARY OF THE INVENTION

According to its main embodiment, set out in appended claim 1, the instant invention relates to thermoplastic compositions including: (a) from 1 wt% to 99 wt% of at least one crystalline polyester; (b) from 1 wt% to99 wt% of a polycarbonate copolymer comprising a polycarbonate-siloxane (PC-Si) copolymer, a polycarbonate-isophthalate terephthalate resorcinol (PC-ITR) copolymer, or a combination thereof; (c) from 10 wt% to 50 wt% of a reinforcing filler; and (d) from 1 wt% to 10 wt% of a laser direct structuring (LDS) additive wherein the combined weight percent value of all components does not exceed 100 wt%, and all weight percent values are based on the total weight of the composite .
According to further, preferred embodiments of the instant invention, the at least one crystalline polyester includes polybutylene terephthalate (PBT) and the polycarbonate copolymer includes a polycarbonate-siloxane (PC-Si) copolymer. In further preferred embodiments of the instant invention, the at least one reinforcing filler includes glass fiber, and in specific preferred embodiments a flat glass fiber. The composition according to the invention has improved adhesion, surface appearance and/or warpage properties as compared to a comparative composition that does not include the polycarbonate copolymer comprising a polycarbonate-siloxane (PC-Si) copolymer, a polycarbonate-isophthalate terephthalate resorcinol (PC-ITR) copolymer, or a combination thereof.

## BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various aspects discussed in the present document.

FIG. 1 is a photograph comparing plating performance of comparative and example compositions according to the invention.

FIG. 2 is a photograph comparing warpage performance of comparative and example compositions according to the invention.

FIG. 3 is a photograph comparing warpage performance of comparative and example compositions according to the invention.

## DETAILED DESCRIPTION

The present invention relates to polyester/PC copolymer blends comprising a polycarbonate-siloxane (PC-Si) copolymer, a polycarbonate-isophthalate terephthalate resorcinol (PC-ITR) copolymer, or a combination thereof which address the chemical resistance problem of PC and the warpage problem of crystalline polymers. Compositions according to the present invention offer good and balanced performance in flow, mechanical, dimensional stability and chemical resistance properties. The combination of the crystalline polyester (e.g., polybutylene terephthalate (PBT)) and PC copolymer comprising a polycarbonate-siloxane (PC-Si) copolymer, a polycarbonate-isophthalate terephthalate resorcinol (PC-ITR) copolymer, or a combination thereof, provides compositions that are suitable for high modulus applications such as a mobile phone antenna, which is beneficial to both the current and the next generation of telecommunication applications.

The instant invention can be understood more readily by reference to the following detailed description of the disclosure and the Examples included therein. , the present invention pertains to thermoplastic compositions including: (a) from 1 wt% to 99 wt% of at least one crystalline polyester; (b) from 1 wt% to 99 wt% of a polycarbonate copolymer comprising a polycarbonate-siloxane (PC-Si) copolymer, a polycarbonate-isophthalate terephthalate resorcinol (PC-ITR) copolymer, or a combination thereof; (c) from 10 wt% to 50 wt% of a reinforcing filler; and (d) from 1 wt% to 10 wt% of a laser direct structuring (LDS) additive, wherein the combined weight percent value of all components does not exceed 100 wt%, and all weight percent values are based on the total weight of the composite.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

### Definitions

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polycarbonate copolymer" includes mixtures of two or more polycarbonate copolymers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself.It is also understood that each unit between two particular units are also disclosed. For example, if 10 and 15 are disclosed, then 11, 12, 13, and 14 are

also disclosed.

As used herein, the terms "about" and "at or about" mean that the amount or value in question can be the designated value, approximately the designated value, or about the same as the designated value. It is generally understood, as used herein, that it is the nominal value indicated $\pm$10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, the terms "number average molecular weight" or "$M_n$" can be used interchangeably, and refer to the statistical average molecular weight of all the polymer chains in the sample and is defined by the formula:

$$M_n = \frac{\sum N_i M_i}{\sum N_i},$$

where $M_i$ is the molecular weight of a chain and $N_i$ is the number of chains of that molecular weight. $M_n$ can be determined for polymers, e.g., polycarbonate polymers, by methods well known to a person having ordinary skill in the art using molecular weight standards, e.g. polycarbonate standards or polystyrene standards, preferably certified or traceable molecular weight standards.

As used herein, the terms "weight average molecular weight" or "$M_w$" can be used interchangeably, and are defined by the formula:

$$M_w = \frac{\sum N_i {M_i}^2}{\sum N_i M_i},$$

where $M_i$ is the molecular weight of a chain and $N_i$ is the number of chains of that molecular weight. Compared to $M_n$, $M_w$ takes into account the molecular weight of a given chain in determining contributions to the molecular weight average. Thus, the greater the molecular weight of a given chain, the more the chain contributes to the $M_w$. $M_w$ can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, the terms "polydispersity index" or "PDI" can be used interchangeably, and are defined by the formula:

$$PDI = \frac{M_w}{M_n}.$$

The PDI has a value equal to or greater than 1, but as the polymer chains approach uniform chain length, the PDI approaches unity.

The terms "BisA," "BPA," or "bisphenol A," which can be used interchangeably, as used herein refers to a compound having a structure represented by the formula:

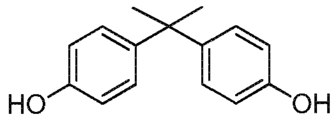

BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

As used herein, "polycarbonate" refers to an oligomer or polymer including residues of one or more dihydroxy compounds, e.g., dihydroxy aromatic compounds, joined by carbonate linkages; it also encompasses homopolycarbonates, copolycarbonates, and (co)polyester carbonates.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

## Thermoplastic Compositions

The instant invention relates to a thermoplastic composition including: (a) from 1 wt% to 99 wt% of at least one crystalline polyester; (b) from 1 wt% to 99 wt% of a polycarbonate copolymer comprising a polycarbonate-siloxane (PC-Si) copolymer, a polycarbonate-isophthalate terephthalate resorcinol (PC-ITR) copolymer, or a combination thereof; (c) from 10 wt% to 50 wt% of a reinforcing filler; and (d) from 1 wt% to 10 wt% of a laser direct structuring (LDS) additive, whereinthe combined weight percent value of all components does not exceed 100 wt%, and all weight percent values are based on the total weight of the composite.

According to preferred embodiments of the invention, the at least one crystalline polyester includes polybutylene terephthalate (PBT), polycyclohexylene dimethylene terephthalate (PCT), polyethylene terephthalate (PET), polyethylene terephthalate glycol (PETG), polycyclohexylene dimethylene terephthalate glycol (PCTG), polycyclohexylene dimethylene terephthalate acid (PCTA), copolymers thereof, or a combination thereof. In a particular aspect the at least one crystalline polyester includes polybutylene terephthalate (PBT).

According to the instant invention, the composition includes from 1 wt% to 99 wt% of at least one crystalline polyester. According to preferred embodiments, the composition of the invention includes from 30 wt% to 99 wt% of at least one crystalline polyester. According to further embodiments of the invention the composition includes the at least one crystalline polyester as the major component; i.e., the at least one crystalline polyester is present in a greater amount than any other component in the composition, such as the polycarbonate copolymer or the reinforcing filler. According to yet further embodiments of the invention, the at least one crystalline polyester is present in the composition in a greater amount than the polycarbonate copolymer.

The required polycarbonate copolymers comprise a polycarbonate-siloxane (PC-Si) copolymer, a polycarbonate-isophthalate terephthalate resorcinol (PC-ITR) copolymer, or a combination thereof.

According to embodiments of the invention, the composition includes from 1 wt% to 99 wt% of a polycarbonate copolymer comprising a polycarbonate-siloxane (PC-Si) copolymer, a polycarbonate-isophthalate terephthalate resorcinol (PC-ITR) copolymer, or a combination thereof. In certain embodiments of the invention, the composition includes from 1 wt% to 30 wt% of a polycarbonate copolymer comprising a polycarbonate-siloxane (PC-Si) copolymer, a polycarbonate-isophthalate terephthalate resorcinol (PC-ITR) copolymer, or a combination thereof. In particular embodiments of the instant invention, the composition includes a lower content of the polycarbonate copolymer comprising a polycarbonate-siloxane (PC-Si) copolymer, a polycarbonate-isophthalate terephthalate resorcinol (PC-ITR) copolymer, or a combination thereof, as compared to the at least one crystalline polyester. In still more particular embodiments, the compositions of the instant invention comprise from 1 wt% to 30 wt% of the at least one crystalline polyester and from 30 wt% to 99 wt% of the polycarbonate copolymer comprising a polycarbonate-siloxane (PC-Si) copolymer, a polycarbonate-isophthalate terephthalate resorcinol (PC-ITR) copolymer, or a combination thereof.

According to preferred embodiments of the instant invention, the polycarbonate copolymer includes a polycarbonate-siloxane (PC-Si) copolymer having a siloxane content of from 10 wt% to 30 wt%. In specific embodiments the PC-Si copolymer has a siloxane content of from 15 wt% to 25 wt%, or from 18 wt% to 22 wt%, or 20 wt%.

The reinforcing filler may include but is not limited to silica, talc, mica, carbon black, carbon fiber, aramid fiber, glass fiber, glass flake, hollow glass beads, milled glass fiber, and combinations thereof. In certain embodiments the reinforcing filler includes glass fiber. Any suitable glass fiber may be used.

In preferred embodiments of the invention the glass fiber is a flat glass fiber. Fiber flatness is a function of ratio between width and height of a rectangular cross section of the fiber. In some embodiments the flat glass fiber has a flatness of at least 2. In other embodiments the glass fiber has a flatness of from 2 to 10, or from 2 to 5, or 4.

The LDS additive may include, but is not limited to: a heavy metal mixture oxide spinel, such as copper chromium oxide spinel; a copper salt, such as copper hydroxide phosphate copper phosphate, copper sulfate, cuprous thiocyanate, spinel based metal oxides (such as copper chromium oxide), organic metal complexes (such as palladium/palladium-containing heavy metal complexes), metal oxides, metal oxide-coated fillers, antimony doped tin oxide coated on a mica substrate, a copper containing metal oxide, a zinc containing metal oxide, a tin containing metal oxide, a magnesium containing metal oxide, an aluminum containing metal oxide, a gold containing metal oxide, a silver containing metal oxide, or the like, or a combination including at least one of the foregoing LDS additives.

According to preferred embodiments of the instant invention, the LDS additive includes a heavy metal mixture oxide spinel, a copper salt, an organic metal complex, a metal oxide, a metal oxide-coated filler, antimony doped tin oxide coated on a mica substrate, a copper containing metal oxide, a zinc containing metal oxide, a tin containing metal oxide, a magnesium containing metal oxide, an aluminum containing metal oxide, a gold containing metal oxide, a silver containing metal oxide, or a combination thereof. In a particular embodiment the LDS additive includes copper chromite black spinel.

In some embodiments of the instant invention, the composition further includes from 1 wt% to 10 wt% of a mineral filler that is different than the reinforcing filler. The mineral filler may include, but is not limited to, mica, talc, calcium carbonate, dolomite, wollastonite, barium sulfate, silica, kaolin, feldspar, a barite, or a combination thereof. In a certain embodiment the mineral filler includes talc.

The composition according to the instant invention further includes in some embodiments at least one impact modifier. In certain embodiments the at least one impact modifier includes polyethylene-glycidyl methacrylate (PE-GMA), styrene-ethylene/1-butene-styrene (SEBS), or a combination thereof.

The thermoplastic composition according to the instant invention has improved properties as compared to conventional LDS compositions, and in particular to conventional PBT and polycarbonate-based compositions. In one embodiment the composition has improved adhesion, as determined in accordance with ASTM D3359, as compared to a comparative composition that does not include the polycarbonate copolymer comprising a polycarbonate-siloxane (PC-Si) copolymer, a polycarbonate-isophthalate terephthalate resorcinol (PC-ITR) copolymer, or a combination thereof. As used herein, improved adhesion means that the average adhesion increases by at least 1B grade when measured by a cross-hatch tape test at a laser power level of 7 watts (W) or higher and at a frequency of 1 hertz (Hz).

In other embodiments the composition of the instant invention has improved surface appearance as compared to a comparative composition that does not include the polycarbonate copolymer comprising a polycarbonate-siloxane (PC-Si) copolymer, a polycarbonate-isophthalate terephthalate resorcinol (PC-ITR) copolymer, or a combination thereof. In further embodiments the composition of the instant invention has improved surface appearance as compared to a comparative composition that does not include PBT. Improved surface appearance can be visually observed by less reinforcing filler (e.g., glass fiber) floating in a molded sample of the composition. Improved surface appearance may also be evaluated on the basis of improved gloss as measured using the L*a*b* color methodology (i.e., the IELAB color space defined by the International Commission on Illumination (CIE)).

In certain embodiments the composition of the invention has reduced warpage as compared to a comparative composition that does not include the polycarbonate copolymer comprising a polycarbonate-siloxane (PC-Si) copolymer, a polycarbonate-isophthalate terephthalate resorcinol (PC-ITR) copolymer, or a combination thereof. Warpage, or bending, can be visually observed in a molded sample of the composition. In a particular embodiment warpage can be evaluated by molding a sample of the composition that is at least 100 millimeter (mm) x 100 mm - such as but not limited to 150 mm x 150 mm - and observing the flatness of the sample. In other embodiments warpage can be evaluated using a

quantification method that involves molding a disk having a diameter of about 135 mm and a thickness of from about 0.9 mm to about 1.2 mm.

In some embodiments the composition of the invention has improved gloss, as tested in accordance with ASTM D523, as compared to a comparative composition that includes polycarbonate instead of the at least one crystalline polyester.

According to an embodiment of the instant invention, the composition is a laser direct structuring (LDS) composition suitable for use in LDS applications.

**Methods of Manufacture**

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

**Articles of Manufacture**

According to certain embodiments, the instant invention pertains to shaped, formed, or molded articles including the thermoplastic compositions as claimed herein. The thermoplastic compositions can be molded into useful shaped articles by a variety of means such as injection molding, extrusion, rotational molding, blow molding and thermoforming to form articles and structural components of, for example, personal or commercial electronics devices, including but not limited to cellular telephones, tablet computers, personal computers, notebook and portable computers, and other such equipment, medical applications, RFID applications, automotive applications, and the like. In a further embodiment, the article is extrusion molded. In a still further embodiment, the article is injection molded.

Various combinations of elements of the invention are encompassed by the invention, e.g., combinations of elements from dependent claims that depend upon the same independent claim.

**EXAMPLES**

The following examples are put forth so as to provide those of ordinary skill in the art with a complete disclosure and description of how the compounds, compositions, articles, devices and/or methods described herein are made and evaluated, and are intended to be purely exemplary and are not intended to limit the invention, as defined in the appended claims. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

The materials used in the comparative and example compositions described herein are listed in Table 1:

**Table** 1 - **Materials**

| Item Description | Chemical Description | Source |
|---|---|---|
| 100 grade PCP | PC | SABIC |
| PCP1300 | PC | SABIC |
| 20% PC/siloxane copolymer, PCP endcapped (EXL) | PC Copolymer | SABIC |
| Branched THPE, HBN endcapped PC | PC Copolymer | SABIC |
| SLX 90/10 PCP capped (PC-ITR copolymer) | PC Copolymer | SABIC |
| PBT195 | PBT | Changchun Plastic |
| PBT315 | PBT | Changchun Plastic |
| Irgafos® 168 | Antioxidant | BASF |
| Irganox® 1010 | Antioxidant | BASF |
| P-EPQ® powder (phosphorus-based) | Antioxidant | Clariant |
| SAN encapsulated PTFE - intermediate resin | Flame retardant | SABIC |
| Benzotriazole | Anti-UV agent | Cytec Industries |
| Pentaerythritol tetrastearate (PETS) | Mold release | FACL |
| Fushimi FP-110 | Flame retardant | Fushimi |
| Mono-zinc phosphate (MZP) | Stabilizer | Budenheim |
| Copper chromite black Spinel (Black 1G) | LDS additive | Shepherd |
| Fine talc | Inorganic filler | Luzenac |
| Nittobo, CSG 3PA-830, flat glass fiber | Glass fiber | Nittobo |
| Lotader AX8900 | Impact modifier | Arkema |
| High MW SEBS | Impact modifier | Kraton |

Pellets were compounded from the compositions according to conventional processes. The resin and additive were pre-mixed and fed via the main throat; glass fiber was fed downstream in the extruder. The PC-based (comparative) compositions were compounded using an output of 40 kilograms per hour (kg/hr), a screw speed of 300 revolutions per minute (RPM), a vacuum of 0.6 bar, a torque of 55%, a barrel temperature of from 255-265 °C and a die temperature of 265 °C. The PBT (comparative and example) compositions were compounded using an output of 50 kg/hr, a screw speed of 200 RPM, a vacuum of 0 bar, a torque of 80%, a barrel temperature of 240-250 °C and a die temperature of 250 °C.

The pellets were injection molded according to the conditions set forth in Table 2:

**Table 2 - Injection Molding Parameters**

| Molding parameters | Unit | PC-based Compositions | PBT-based Compositions |
|---|---|---|---|
| Pre-drying time | hr | 3 | 4 |
| Pre-drying temp | °C | 110 | 120 |
| Hopper temp | °C | 50 | 50 |
| Zone 1 temp | °C | 270 | 240 |
| Zone 2 temp | °C | 275 | 250 |
| Zone 3 temp | °C | 280 | 250 |

(continued)

| Molding parameters | Unit | PC-based Compositions | PBT-based Compositions |
|---|---|---|---|
| Nozzle temp | °C | 275 | 245 |
| Mold temp | °C | 100 | 120 |

Table 3 lists the compositions formed:

**Table 3 - Comparative and Example Compositions**

| Item Description | C0 | C1 | C2 | C3 | Ex1 | Ex2 | Ex3 |
|---|---|---|---|---|---|---|---|
| 100 grade PCP | 21 | 15 | 0 | 10 | 0 | 0 | 0 |
| PCP1300 | 42.5 | 23.9 | 0 | 0 | 0 | 0 | 0 |
| PBT195 | | 0 | 30.6 | 25.5 | 25.5 | 25.5 | 15 |
| PBT315 | | 0 | 27 | 22 | 22 | 22 | 0 |
| SLX 90/10 PCP capped | | 0 | 0 | 0 | 10 | 0 | 48.5 |
| 20% PC/siloxane copolymer, PCP endcapped | | 8 | 0 | 0 | 0 | 10 | 0 |
| Branched THPE, HBN endcapped PC | | 10 | 0 | 0 | 0 | 0 | 0 |
| Copper chromite black spinel (Black 1G) | 5 | 5 | 5 | 5 | 5 | 5 | 5 |
| Fine talc | 1 | 1 | 1 | 1 | 1 | 1 | 1 |
| Nittobo, CSG 3PA-830, flat glass fiber | 30 | 30 | 30 | 30 | 30 | 30 | 30 |
| Lotader AX8900 | | 0 | 4 | 4 | 4 | 4 | 0 |
| High MW SEBS | | 0 | 2 | 2 | 2 | 2 | 0 |
| Irgafos® 168 | 0.1 | 0.1 | 0.1 | 0.1 | 0.1 | 0.1 | 0.1 |
| Irganox® 1010 | 0.1 | 0.1 | 0.1 | 0.1 | 0.1 | 0.1 | 0.1 |
| P-EPQ® powder | 0.1 | 0.1 | 0 | 0 | 0 | 0 | 0 |
| SAN encapsulated PTFE - intermediate resin | | 0.6 | 0 | 0 | 0 | 0 | 0 |
| Benzotriazole | | 0 | 0.1 | 0.1 | 0.1 | 0.1 | 0.1 |
| Pentaerythritol Tetrastearate | 0.1 | 0.1 | 0.1 | 0.1 | 0.1 | 0.1 | 0.1 |
| Fushimi FP-110 | | 6 | 0 | 0 | 0 | 0 | 0 |
| MZP | 0.1 | 0.1 | 0 | 0.1 | 0.1 | 0.1 | 0.1 |
| Total (wt%): | 100 | 100 | 100 | 100 | 100 | 100 | 100 |

The properties of the compositions of Table 3 (C1, C2, and Ex1-Ex3) are listed Table 4:

**Table 4 - Properties of Compositions of Table 3**

| Properties/Standard | Unit | C1 | C2 | C3 | Ex1 | Ex2 | Ex3 |
|---|---|---|---|---|---|---|---|
| Heat distortion temperatures (HDT), ASTM D648, 0.45 MPa, 3.2 mm | °C | 118 | 218 | 211 | 210 | 209 | 104 |
| Flexural modulus, ASTM D790, 1.27 mm/min | MPa | 8220 | 7480 | 7620 | 7530 | 7340 | 8850 |
| Flexural stress, ASTM D790, 1.27 mm/min | MPa | 146 | 147 | 146 | 150 | 141 | 147 |
| Tensile modulus, ASTM D638, 1 mm/min | MPa | 9173 | 8627 | 8127 | 8726 | 8304 | 9619 |
| Tensile stress, ASTM D638, 5 mm/min | MPa | 99.2 | 83.9 | 82.2 | 88 | 81.3 | 102 |
| Tensile strain, ASTM D638, 5 mm/min | % | 1.8 | 2.8 | 2.3 | 2.7 | 2.7 | 2.3 |

(continued)

| Properties/Standard | Unit | C1 | C2 | C3 | Ex1 | Ex2 | Ex3 |
|---|---|---|---|---|---|---|---|
| Notched Izod impact strength, ASTM D256, RT | J/m | 67.2 | 83.4 | 84.1 | 88.5 | 95 | 49 |
| Unnotched Izod impact strength, ASTM D256, RT | J/m | 391 | 709 | 708 | 735 | 671 | 269 |
| Plating index, LPKF standard | - | 1.0 | 0.9 | 0.9 | 0.9 | 0.9 | 1.0 |
| Adhesion by cross-hatch tape test, ASTM D3359 | - | 5B | 1B-5B | 0B-5B | 3B-5B | 4B-5B | 4B-5B |
| Gloss, ASTM D523, 85° geometry | % | 73.5 | - | - | 86.1 | 80.6 | - |

Specific adhesion properties for C2, Ex1 and Ex2, as tested at various powers in accordance with ASTM D3359 at 40 kilohertz (KHz) and 100 KHz are provided in Table 5:

**Table 5 - Adhesion Properties**

| Power (W) | Frequency (KHz) | C2 | C3 | Ex1 | Ex2 |
|---|---|---|---|---|---|
| 3 | 40 | 5B | 5B | 5B | 5B |
| 3 | 100 | 5B | 5B | 5B | 5B |
| 5 | 40 | 4B | 5B | 5B | 5B |
| 5 | 100 | 4B | 4B | 4B | 5B |
| 7 | 40 | 4B | 5B | 5B | 5B |
| 7 | 100 | 1B | 2B | 4B | 4B |
| 8 | 40 | 4B | 5B | 5B | 4B |
| 8 | 100 | 1B | 2B | 4B | 4B |
| 10 | 40 | 4B | 5B | 5B | 5B |
| 10 | 100 | 1B | 0B | 3B | 4B |
| 11 | 40 | 4B | 5B | 5B | 5B |
| 11 | 100 | 1B | 0B | 3B | 4B |

Comparative composition C1 based on conventional 30 wt% glass fiber-filled PC for LDS applications, while comparative composition C2 is a control formulation based on conventional 30 wt% glass fiber-filled PBT for LDS applications. Ex1 and Ex2 combine PBT and PC copolymer with the same glass fiber type and loading. Ex3 is a PBT blend that includes a PC-ITR copolymer as the major component (same glass fiber type and loading, but no impact modifiers). Comparative composition C0 should be closer to Ex1 and Ex2 as a more ideal control, but its performance was not tested.

As shown in Table 4, example compositions Ex1 and Ex2 have comparable mechanical properties and better thermal properties. For chemical plating after laser activation, the plating indexes are both 0.9 implying sufficient metal deposition. Conventionally, glass fiber-filled PC LDS compounds exhibit bad appearance by glass fiber floating due to its poor chemical resistance upon plating. In contrast, however, example compositions Ex1 and Ex2, which include PBT and a PC copolymer (siloxane or ITR) were observed to have a much more glossy appearance after plating. This is mainly attributed to the stronger chemical resistance by crystalline PBT. Further, the 85° geometry gloss data in Table 4 also evidences that the appearance of the crystalline polyester (PBT)/PC copolymer compositions (Ex1, 86.1% gloss and Ex2, 80.6% gloss) is better than the comparative composition including PC (C1, 73.5% gloss).

Plated chips of the compositions of C2, Ex1 and Ex2 are illustrated in FIG. 1. Adhesion data for these and other compositions is provided in Table 5. Compared with the conventional PBT composition C2, example compositions Ex1 and Ex2 exhibit better plating efficiency at higher laser power (7-11 watts (W)) and frequencies (100 hertz (Hz) and higher). This attributed to better char formation capability by the PC copolymer upon laser burning, while burned PBT may release more fuel ($CH_2$ units), leading to a damaged/destructed surface and worse deposition of the metal layer.

Similar performance is shown comparing comparative composition C3 (which does not include a polycarbonate copolymer including a polycarbonate-siloxane (PC-Si) copolymer or a polycarbonate-isophthalate terephthalate resorcinol (PC-ITR) copolymer) with Ex1 and Ex2. Both example compositions Ex1 and Ex2 maintain good plating properties above 7W at a frequency of 100 KHz, while comparative composition C3 does not.

Warpage is a common problem for crystalline polymers such as PBT or polyamide. The PBT blends including a PC copolymer offer better dimensional stability for even large molded parts. As demonstrated in FIG. 2, the comparative PBT plaque (C2, on top) had substantial bending as molded. The middle plaque including 10 wt% PC-ITR copolymer (SLX, Ex1) had much better flatness, while the bottom plaque including 48.5 wt% PC-ITR copolymer (SLX, Ex3) is completely flat. As further demonstrated in FIG. 3, the bottom plaque (PC-ITR copolymer, Ex1) was much flatter than the top plaque (C3) which included conventional polycarbonate.

## Claims

1. A thermoplastic composition comprising:

   (a) from 1 wt% to 99 wt% of at least one crystalline polyester;
   (b) from 1 wt% to 99 wt% of a polycarbonate copolymer comprising a polycarbonate-siloxane (PC-Si) copolymer, a polycarbonate-isophthalate terephthalate resorcinol (PC-ITR) copolymer, or a combination thereof;
   (c) from 10 wt% to 50 wt% of a reinforcing filler; and
   (d) from 1 wt% to 10 wt% of a laser direct structuring (LDS) additive,

   wherein the combined weight percent value of all components does not exceed 100 wt%, and all weight percent values are based on the total weight of the composite.

2. The thermoplastic composition according to claim 1, wherein the at least one crystalline polyester comprises polybutylene terephthalate (PBT), polycyclohexylene dimethylene terephthalate (PCT), polyethylene terephthalate (PET), polyethylene terephthalate glycol (PETG), polycyclohexylene dimethylene terephthalate glycol (PCTG), polycyclohexylene dimethylene terephthalate acid (PCTA), copolymers thereof, or a combination thereof.

3. The thermoplastic composition according to claim 1, wherein the at least one crystalline polyester comprises polybutylene terephthalate (PBT).

4. The thermoplastic composition according to any of claims 1 to 3, wherein the polycarbonate copolymer comprises a polycarbonate-siloxane (PC-Si) copolymer having a siloxane content of from 10 wt% to 30 wt%.

5. The thermoplastic composition according to any of claims 1 to 4, wherein the reinforcing filler comprises silica, talc, mica, carbon black, carbon fiber, aramid fiber, glass fiber, glass flake, hollow glass beads, milled glass fiber, or combinations thereof.

6. The thermoplastic composition according to any of claims 1 to 5, wherein the reinforcing filler comprises flat glass fiber.

7. The thermoplastic composition according to any of claims 1 to 6, wherein the LDS additive comprises a heavy metal mixture oxide spinel, a copper salt, an organic metal complex, a metal oxide, a metal oxide-coated filler, antimony doped tin oxide coated on a mica substrate, a copper containing metal oxide, a zinc containing metal oxide, a tin containing metal oxide, a magnesium containing metal oxide, an aluminum containing metal oxide, a gold containing metal oxide, a silver containing metal oxide, or a combination thereof.

8. The thermoplastic composition according to any of claims 1 to 7, wherein the composition further comprises from 1 wt% to 10 wt% of a mineral filler that is different than the reinforcing filler, and
   wherein the mineral filler comprises calcium carbonate, dolomite, wollastonite, barium sulfate, kaolin, feldspar, a barite, or a combination thereof.

9. The thermoplastic composition according to any of claims 1 to 8, wherein the reinforcing filler comprises talc.

10. The thermoplastic composition according to any of claims 1 to 9, wherein the composition further comprises at least one impact modifier.

11. The thermoplastic composition according to claim 10, wherein the at least one impact modifier comprises polyethylene-glycidyl methacrylate (PE-GMA), styrene-ethylene/1-butene-styrene (SEBS), or a combination thereof.

12. The thermoplastic composition according to any of claims 1 to 11, wherein the composition has:

    improved adhesion, as determined in accordance with ASTM D3359;
    improved surface appearance; or
    reduced warpage,
    as compared to a comparative composition that does not include the polycarbonate copolymer.

13. The thermoplastic composition according to any of claims 1 to 12, wherein the composition has improved gloss, as tested in accordance with ASTM D523, as compared to a comparative composition that includes polycarbonate instead of the at least one crystalline polyester.

14. The thermoplastic compositions according to any of claims 1 to 13, wherein the composition is laser direct structuring (LDS) composition suitable for use in LDS applications.

**Patentansprüche**

1. Eine thermoplastische Zusammensetzung, die Folgendes umfasst:

    (a) 1 bis 99 Gewichtsprozent mindestens eines kristallinen Polyesters,
    (b) 1 bis 99 Gewichtsprozent eines Polycarbonatcopolymers, das ein Polycarbonat-Siloxan- (PC-Si-)Copolymer, ein Polycarbonat-Isophthalatterephthalatresorcinol- (PC-ITR-)Copolymer oder eine Kombination davon umfasst;
    (c) 10 bis 50 Gewichtsprozent eines Verstärkerfüllstoffs und
    (d) 1 bis 10 Gewichtsprozent eines Laser-Direkt-Strukturierungs- (LDS-)Zusatzstoffs, wobei die kombinierten Gewichtsprozentwerte aller Bestandteile 100 Gewichtsprozent nicht überschreiten und alle Gewichtsprozentwerte auf dem Gesamtgewicht des Verbundstoffs *(sic)* basieren.

2. Die thermoplastische Zusammensetzung gemäß Anspruch 1, wobei der mindestens eine kristalline Polyester Polybutylenterephthalat (PBT), Polycyclohexylendimethylenterephthalat (PCT), Polyethylenterephthalat (PET), Polyethylenterephthalatglycol (PETG), Polycyclohexylendimethylenterephthalatglycol (PCTG), Polycyclohexylendimethylenterephthalatsäure (polycyclohexylene dimethylene terephthalate acid, PCTA), Copolymere davon oder eine Kombination davon umfasst.

3. Die thermoplastische Zusammensetzung gemäß Anspruch 1, wobei der mindestens eine kristalline Polyester Polybutylenterephthalat (PBT) umfasst.

4. Die thermoplastische Zusammensetzung gemäß einem beliebigen der Ansprüche 1 bis 3, wobei das Polycarbonatcopolymer ein Polycarbonat-Siloxan- (PC-Si-)Copolymer mit einem Siloxangehalt von 10 bis 30 Gewichtsprozent umfasst.

5. Die thermoplastische Zusammensetzung gemäß einem beliebigen der Ansprüche 1 bis 4, wobei der Verstärkerfüllstoff Siliciumdioxid, Talk, Glimmermineral, Ruß, Carbonfaser, Aramidfaser, Glasfaser, Glasflocken, hohle Glasperlen, zerkleinerte Glasfaser oder Kombinationen davon umfasst.

6. Die thermoplastische Zusammensetzung gemäß einem beliebigen der Ansprüche 1 bis 5, wobei der Verstärkerfüllstoff Flachglasfaser umfasst.

7. Die thermoplastische Zusammensetzung gemäß einem beliebigen der Ansprüche 1 bis 6, wobei der LDS-Zusatzstoff einen Schwermetallmischungsoxidspinell, ein Kupfersalz, einen organischen Metallkomplex, ein Metalloxid, einen mit Metalloxid beschichteten Füllstoff, mit Antimon dotiertes Zinnoxid, geschichtet auf ein Glimmersubstrat, ein Kupfer enthaltendes Metalloxid, ein Zink enthaltendes Metalloxid, ein Zinn enthaltendes Metalloxid, ein Magnesium enthaltendes Metalloxid, ein Aluminium enthaltendes Metalloxid, ein Gold enthaltendes Metalloxid, ein Silber enthaltendes Metalloxid oder eine Kombination davon umfasst.

8. Die thermoplastische Zusammensetzung gemäß einem beliebigen der Ansprüche 1 bis 7, wobei die Zusammensetzung weiter 1 bis 10 Gewichtsprozent eines mineralischen Füllstoffs umfasst, der sich vom Verstärkerfüllstoff unterscheidet, und

wobei der mineralische Füllstoff Kalziumcarbonat, Dolomit, Wollastonit, Bariumsulfat, Kaolin, Feldspat, einen Barit oder eine Kombination davon umfasst.

**9.** Die thermoplastische Zusammensetzung gemäß einem beliebigen der Ansprüche 1 bis 8, wobei der Verstärkerfüllstoff Talk umfasst.

**10.** Die thermoplastische Zusammensetzung gemäß einem beliebigen der Ansprüche 1 bis 9, wobei die Zusammensetzung weiter mindestens einen Elastifikator umfasst.

**11.** Die thermoplastische Zusammensetzung gemäß Anspruch 10, wobei der mindestens eine Elastifikator Polyethylen-Glycidylmethacrylat (PE-GMA), Styrol-Ethylen/1-Buten-Styrol (SEBS) oder eine Kombination davon umfasst.

**12.** Die thermoplastische Zusammensetzung gemäß einem beliebigen der Ansprüche 1 bis 11, die Folgendes hat:

verbesserte Adhäsion, bestimmt nach ASTM D3359;
verbesserte Oberflächenoptik oder
verminderten Verzug;
verglichen mit einer Vergleichszusammensetzung, die das Polycarbonatcopolymer nicht einschließt.

**13.** Die thermoplastische Zusammensetzung gemäß einem beliebigen der Ansprüche 1 bis 12, die verbesserten Glanz, getestet nach ASTM D523, hat, verglichen mit einer Vergleichszusammensetzung, die Polycarbonat anstelle des mindestens einen kristallinen Polyesters einschließt.

**14.** Die thermoplastischen Zusammensetzungen *(sic)* gemäß einem beliebigen der Ansprüche 1 bis 13, wobei die Zusammensetzung eine Laser-Direkt-Strukturierungs-(LDS-)Zusammensetzung ist, die zum Gebrauch in LDS-Anwendungen geeignet ist.

## Revendications

**1.** Composition thermoplastique comprenant :

(a) de 1 % en poids à 99 % en poids d'au moins un polyester cristallin ;
(b) de 1 % en poids à 99 % en poids d'un copolymère de polycarbonate comprenant un copolymère polycarbonate-siloxane (PC-Si), un copolymère polycarbonate-isophtalate-téréphtalate-résorcinol (PC-ITR), ou une combinaison de ceux-ci ;
(c) de 10 % en poids à 50 % en poids d'une charge renforçante ; et
(d) de 1 % en poids à 10 % en poids d'un additif de structuration directe par laser (LDS),

où la somme des pourcentages en poids de tous les composants ne dépasse pas 100 % en poids, et tous les pourcentages en poids sont rapportés au poids total du composite.

**2.** Composition thermoplastique selon la revendication 1, où ledit au moins un polyester cristallin comprend du polybutylène téréphtalate (PBT), du polycyclohexylène diméthylène téréphtalate (PCT), du polyéthylène téréphtalate (PET), du polyéthylène téréphtalate glycol (PETG), du polycyclohexylène diméthylène téréphtalate glycol (PCTG), d'acide polycyclohexylène diméthylène téréphtalate (PCTA), leurs copolymères, ou une combinaison de ceux-ci.

**3.** Composition thermoplastique selon la revendication 1, où ledit au moins un polyester cristallin comprend du polybutylène téréphtalate (PBT).

**4.** Composition thermoplastique selon quelconque des revendications 1 à 3, où le copolymère de polycarbonate comprend un copolymère polycarbonate-siloxane (PC-Si) ayant une teneur en siloxane de 10 % en poids à 30 % en poids.

**5.** Composition thermoplastique selon quelconque des revendications 1 à 4, où la charge renforçante comprend de la silice, du talc, du mica, du noir de carbone, de la fibre de carbone, de la fibre d'aramide, de la fibre de verre, des paillettes de verre, des billes de verre creuses, de la fibre de verre broyée, ou des combinaisons de ceux-ci.

**6.** Composition thermoplastique selon quelconque des revendications 1 à 5, où charge renforçantecomprend de la fibre de verre plate.

**7.** Composition thermoplastique selon quelconque des revendications 1 à 6, où l'additif LDS comprend un spinelle d'oxyde de mélange de métaux lourds, un sel de cuivre, un complexe métallique organique, un oxyde métallique, une matière de remplissage enrobée d'oxyde métallique, de l'oxyde d'étain dopé à l'antimoine enrobé sur un substrat de mica, un oxyde métallique contenant du cuivre, un oxyde métallique contenant du zinc, un oxyde métallique contenant de l'étain, un oxyde métallique contenant du magnésium, un oxyde métallique contenant de l'aluminium, un oxyde métallique contenant de l'or, un oxyde métallique contenant de l'argent, ou une combinaison de ceux-ci.

**8.** Composition thermoplastique selon quelconque des revendications 1 à 7, où la composition comprend en outre de 1 % en poids à 10 % en poids d'une charge minérale différente de la charge renforçante, et
où la charge renforçantecomprend du carbonate de calcium, de la dolomite, de la wollastonite, du sulfate de baryum, du kaolin, du feldspath, de la barytine, ou une combinaison de ceux-ci.

**9.** Composition thermoplastique selon quelconque des revendications 1 à 8, où la charge renforçante comprend du talc.

**10.** Composition thermoplastique selon quelconque des revendications 1 à 9, où la composition comprend en outre au moins un modificateur de résistance aux chocs.

**11.** Composition thermoplastique selon la revendication 10, où ledit au moins un modificateur de résistance aux chocs comprend du polyéthylène-glycidylméthacrylate (PE-GMA), du styrène-éthylène/1-butène-styrène (SEBS), ou une combinaison de ceux-ci.

**12.** Composition thermoplastique selon quelconque des revendications 1 à 11, où la composition présente :

une adhérence améliorée, telle que déterminée conformément à la norme ASTM D3359 ;
un aspect de surface amélioré ; ou
un gauchissement réduit,
par rapport à une composition de référence qui ne comprend pas le copolymère de polycarbonate.

**13.** Composition thermoplastique selon quelconque des revendications 1 à 12, où la composition présente une brillance améliorée, telle que testée conformément à la norme ASTM D523, par rapport à une composition de référence qui comprend du polycarbonate à la place de l'au moins un polyester cristallin.

**14.** Compositions thermoplastiques selon quelconque des revendications 1 à 13, où la composition est une composition de structuration directe par laser (LDS) adaptée à une utilisation dans des applications LDS.

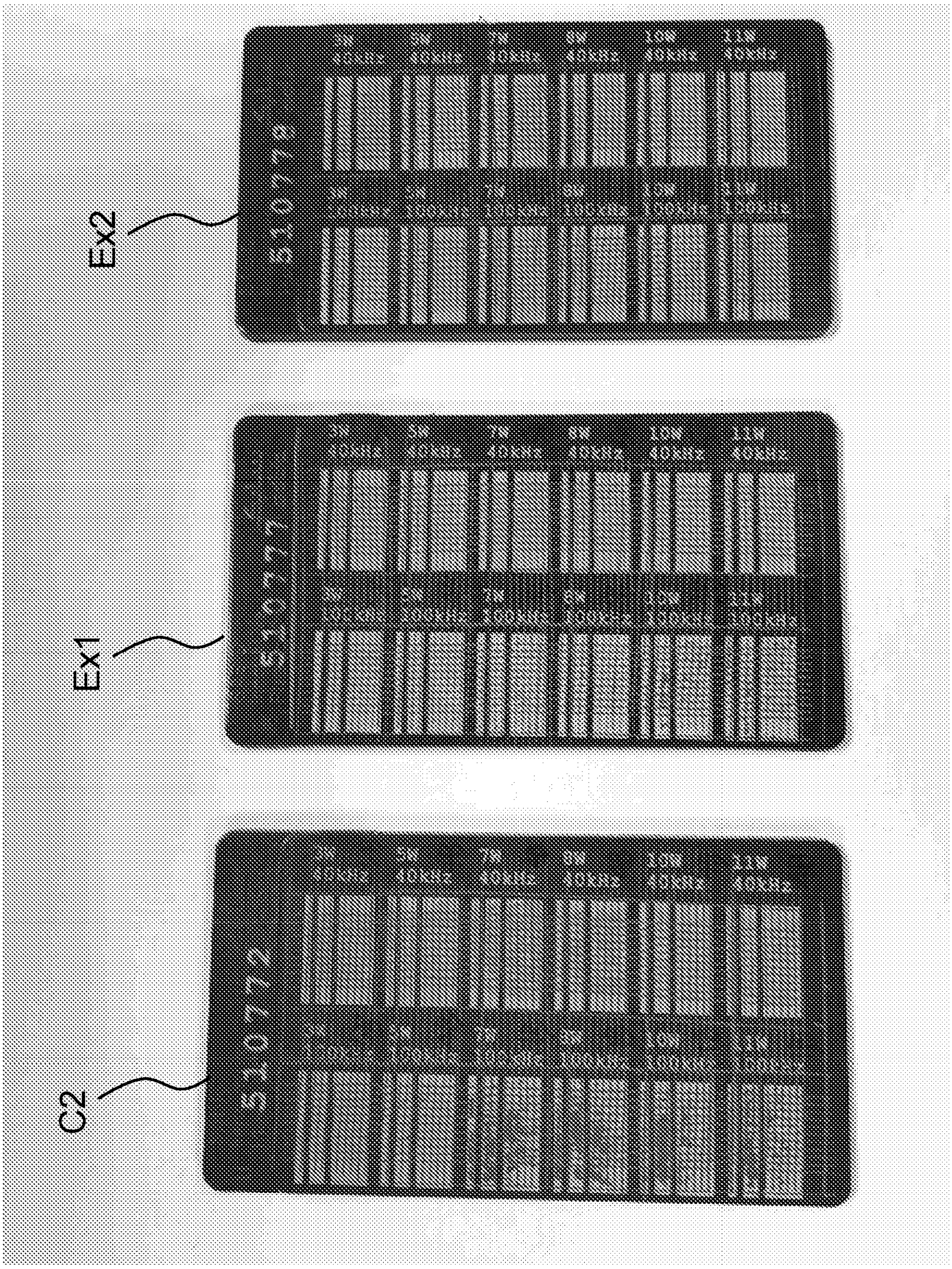


FIG. 1

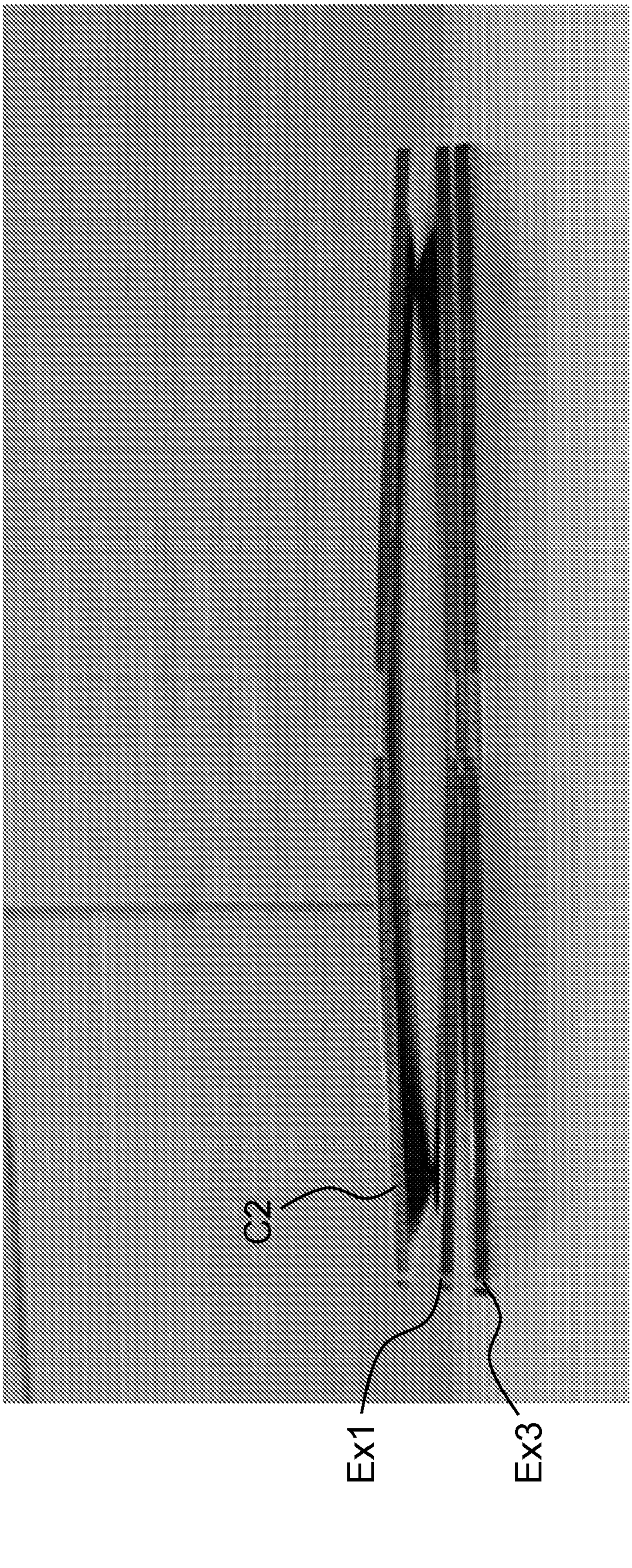


FIG. 2

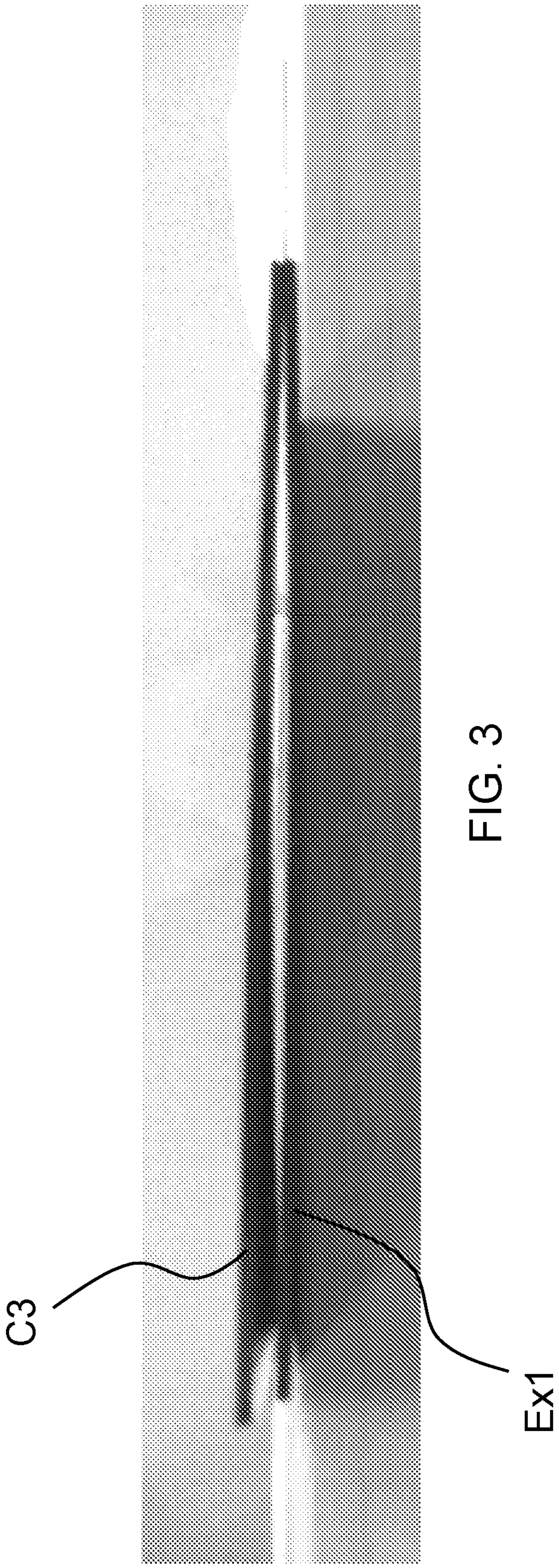


FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2019010324 A1
- US 2018171138 A1